**Europäisches Patentamt**

(19) **European Patent Office**

**Office européen des brevets**

(11) Publication number: **0 200 805**
**A1**

(12) **EUROPEAN PATENT APPLICATION**

(21) Application number: **85105656.4**

(22) Date of filing: **08.05.85**

(51) Int. Cl.⁴: **A 01 G 3/08**

(43) Date of publication of application: **12.11.86**
**Bulletin 86/46**

(71) Applicant: **KAAZ MACHINERY Company, Limited, 5-1-5, Higashi Furumatsu, Okayama City (JP)**

(72) Inventor: **Katsuya, Kazunari, 691-7 Haraojima, Okayama-shi Okayama (JP)**

(74) Representative: **Lewald, Dietrich, Dipl.-Ing., Patentanwälte Müller-Boré, Deufel, Schön, Hertel Lewald, Otto Isartorplatz 6 Postfach 26 02 47, D-8000 München 26 (DE)**

(84) Designated Contracting States: **AT CH DE FR GB IT LI SE**

(54) Elevating device for automatic branch cut-off machines.

(57) An elevating device for the automatic branch cut-off machine which comprises a revolving cutting device (2) for revolving a cutter around a tree trunk (33) and a body proper having a ring rail (11) disposed thereabove for rotatably retaining said revolving cutting device (2) and composed of a frame (3), elevating driving means, a plurality of elevating wheel units (5), and a concentricity control mechanism (6) for driving said elevating wheel units (5).

In order to have the device stably ascending the tree coaxially with the trunk without slip regardless of the size of the tree that elevating wheel unit (5) comprises a pantographic linkage (13–20) in which elevating wheel frames (16) are connected to upper links (17) and lower links (18) and made slidable by slide blocks (19) fitted on guid bars (13) on the side of the body proper (1); a triangular linkage is formed by providing support links between said pantographic linkage and elevating wheel frames (16); and pressing spring force is acted to slide blocks (19; 19) sliding on the guide bars (13) of the machine frame so as to impart sliding force to elevating wheels for adapting said wheels to be in tight contact with the tree trunk (33).

**European Patent Attorneys**

0200805

**Deutsche Patentanwälte**

**Dr. W. Müller-Boré †**

**Dr. Paul Deufel**
Dipl.-Chem., Dipl.-Wirtsch.-Ing.

**Dr. Alfred Schön**
Dipl.-Chem.

**Werner Hertel**
Dipl.-Phys.

**Dietrich Lewald**
Dipl.-Ing.

**Dr.-Ing. Dieter Otto**
Dipl.-Ing.

**Brit. Chartered Patent Agent**

**B. David P. Wetters**
M. A. (Oxon) Ch. Chem. M. R. S. C.

Dr. Müller-Boré und Partner · POB 26 02 47 · D-8000 München 26

K 1724 Lw/As

KAAZ MACHINERY Company, Limited
5-1-5, Higashi Furumatsu Okayama City
Japan

Elevating Device for Automatic Branch Cut-off Machines

The invention relates to an elevating device for automatic branch cut-off machines which comprises a revolving cutting device for revolving a cutter around a tree trunk and a body proper having a ring rail disposed thereabove for rotatably retaining said revolving cutting device and composed of a frame, elevating driving means, a plurality of elevating wheel units, and a concentricity control mechanism for driving said elevating wheel units.

Such machine perform cut-off of branches stretching from the tree trunk during a period of growth.

Disbranching operation for standing trees is performed manually with the use of a saw, hatchet or the like in almost all cases, however, when performed for branches in higher positions, must depend on the use of a ladder and trunk-encircling rope (Burinawa),

- 2 -

thereby imposing dangerous and heavy labor on the operator.

With the recent rise of demand for mechanization and automation of disbranching operation, automatic branch cut-off machines designed to be provided with branch cutting means automatically ascending the tree trunk and with a cutter to cut off branches while revolving around the trunk have been developed. Among elevating means of such automatic disbranching machines, included are a device which spirally ascends the tree trunk, for example, as disclosed in the U.S. Patents Nos. 3,364,962 and 3,454,058, and the other in which the body proper thereof ascends the trunk straight and a combination of an elevating device with a device for revolving the cutter around the trunk is used for permitting the cutter to revolve on the frame of the device body proper, for example, as disclosed in the U.S. Patent No. 4,279,281.

It is an object of the present invention to improve the known elevating means of such automatic disbranching machines of the elevating/revolving type which is to be capable of stably ascending the tree coaxially with the trunk without slip regardless of the size of the tree and which permits the revolving cutter to correctly touch the base part of the branch at any time.

The invention solves this problem as an elevating device for the automatic branch cut-off machine of the kind referred to above in that: said elevating wheel unit comprises a pantographic linkage in which elevating wheel frames are connected to upper links and lower links and made slidable by slide blocks fitted on guide bars on the side of the body proper; a triangular linkage is formed by providing support links between said pantographic linkage and elevating wheel frames; and pressing spring force is acted to slide blocks sliding on the guide bars of the machine frame so as to impart sliding force to elevating wheels for adapting said wheels to be in tight contact with the tree trunk.

By the structure of the invention less troubles occure: the power transmission system extending from the engine to the driving wheels is sufficiently protected from obstructive wast chips of branches, leaves and other dusts.

Also a simplified structure is offered by the invention for enabling an elevating device to be more easily operated and to be of inexpensive construction.

The automatic branch cut-off maching comprises a cutter-revolving device for revolving the cutter around the tree trunk and a body proper provided with a ring rail disposed thereabove for rotatably retaining the abovesaid cutter-revolving device, the body proper being composed of a frame, a vertically driving device, a plurality of elevating wheel units, and a concentricity control mechanism for driving these elevating wheel units. That is to say, first, a plurality of, for example, three, elevating wheel units disposed around the frame are each provided with a pantographic linkage comprising elevating-wheel frames adapted to slide along guide bars on the side of the body proper by means of upper and lower links and, further, with a triangular linkage comprising support links between the abovesaid pantographic linkage and the frame so that the elevating wheels may press the tree trunk with the aid of pressing springs provided between slide blocks sliding along the guide bars of the frame for imparting sliding force to the slide blocks. Secondly, each elevating wheel in the elevating wheel unit converts the linear displacement of the slide block into the rotational displacement of its own and resultant revolutions are transmitted to elevating wheels in the other wheel units through universal joints, all wheel units being in the structure to operate in association with each other through the concentric control mechanism which holds the tree trunk concentrically with the branch cut-off machine. The ring rail disposed above the machine body proper

and serving as a passage for transmitting power to each elevating wheel is shaped rectangulary in cross section like a box and open at a part of the cross section, to which a revolving rack to be integrally connected to the revolving cutting device is internally fixed so that power is transmitted from the revolving cutting device held by a plurality of revolving wheels including at least one driving wheel provided in the ring rail to the revolving rack, and a crawler is extended between the lower driving wheel for ascent and the upper driving wheel for descent, each wheel being provided with a one-way clutch to operate in the opposite direction to that of the other clutch.

A substantial technical level has been achieved that is to be so considered so complete as to enable elevating wheels to be pressed to a tree trunk under uniform pressure and stably elevated or lowered while kept concentric with the tree trunk regardless of the size of the trunk by the sliding type pantographic linkages and triangular linkages, component links in elevating wheel units are operated in association with each other so as to be equally deviated from the tree trunk and to adapt the tree trunk to be concentric with the machine body.

Advantageously the ring rail operates as a power transmission from the engine to the driving wheels and is of rectangular cross section like a box, in which transmission means in the form of a revolving rack gears etc. are contained for preventing soil caused by saw dusts and the like to enter.

Preferably one-way clutches are fixed to elevating wheel shafts so as to operate in directions opposite to each other; the driving wheel for upward movement is discriminated from that for downward movement for increasing tightness of contact between elevating wheels and the tree trunk and preventing the machine from slipping on the trunk, thereby enabling stable and effective elevating performance of the machine.

Other objects and features of the invention will become apparant to those skilled in the art as the disclosure is made in the following detailed description of preferred embodiments of the invention illustrated in the accompanying drawings in which

Fig. 1 is a side view of an automatic branch cut-off machine according to the invention;

Fig. 2 is a side view of the cutter part thereof;

Fig. 3 is a front elevational view of elevating wheel frame;

Fig. 4 is a side view thereof;

Fig. 5 is a plan view of an arrangement of revolving wheels in the ring rail;

Fig. 6 through 8 are enlarged sectional views taken along the lines A-A, B-B, and C-C, respectively, of the ring rail shown in Fig. 5;

Fig. 9 is a plan view of a power transmission part of the concentricity control device to engage elevating wheel units;

Fig. 10 is a plan view, similar to Fig. 9 of an alternate embodiment of the invention;

Fig. 11 and Fig. 12 are enlarged sectional views taken along the lines D-D and E-E, respectively of the power transmission of the concentric control device to engage elevating wheel units in Fig. 10.

Figs. 13 and 14 are sectional views of wheel shaft parts of the elevating wheel unit;

Fig. 15 is a side view of the elevating wheel unit operating for ascending movement, and

Fig. 16 is a side view of the elevating wheel unit operating for descending movement.

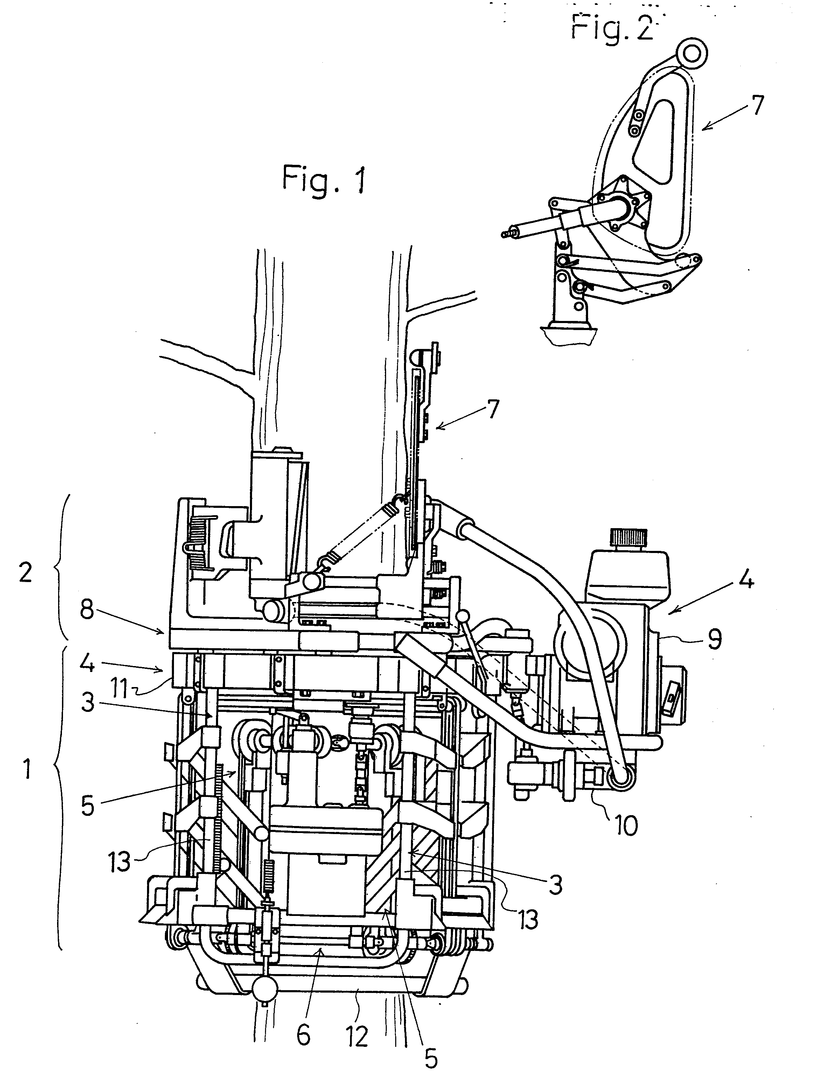

As shown in Fig.1 representing the whole of an automatic branch cut-off machine, component members of the machine are roughly divided into the two groups of a body proper 1 and of a revolving cutting device 2, the body proper 1 being composed of a frame 3, vertically driving device 4, elevating wheel units 5, and concentric control device 6 for transmitting driving power to elevating wheel units.

The revolving cutting device 2 comprises a cutting device 7, revolving device 8, and driving device 4 for driving the former two devices, principal members of the driving device being an engine 9 and transmission 10 commonly used for the abovesaid vertically driving device.

The frame 3 is composed of a ring rail 11 disposed thereabove, incorporating the positionally fixed rack gear, and made open at a part of the ring-like surface, a ring-like stand 12 disposed therebelow and separable to be open at a part as well, and a plurality of guide bars 13 supporting the above two members and to which elevating wheel units 5 are fixed. The ring rail 11 is a part of the frame and also a member constituting part of the revolving cutting device 2 and vertical driving device 4.

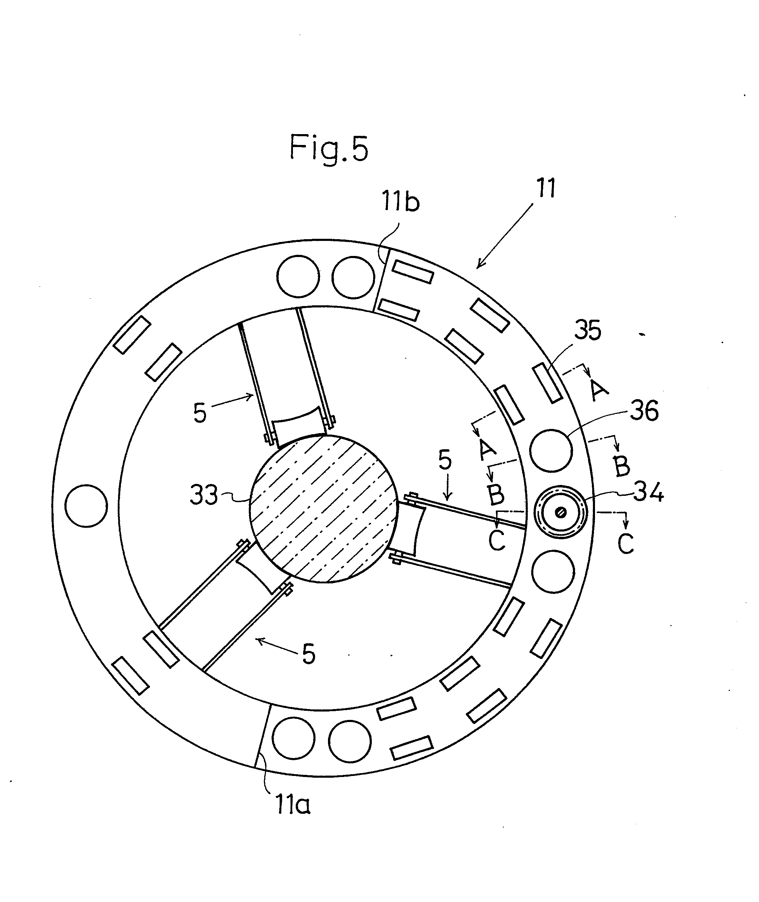

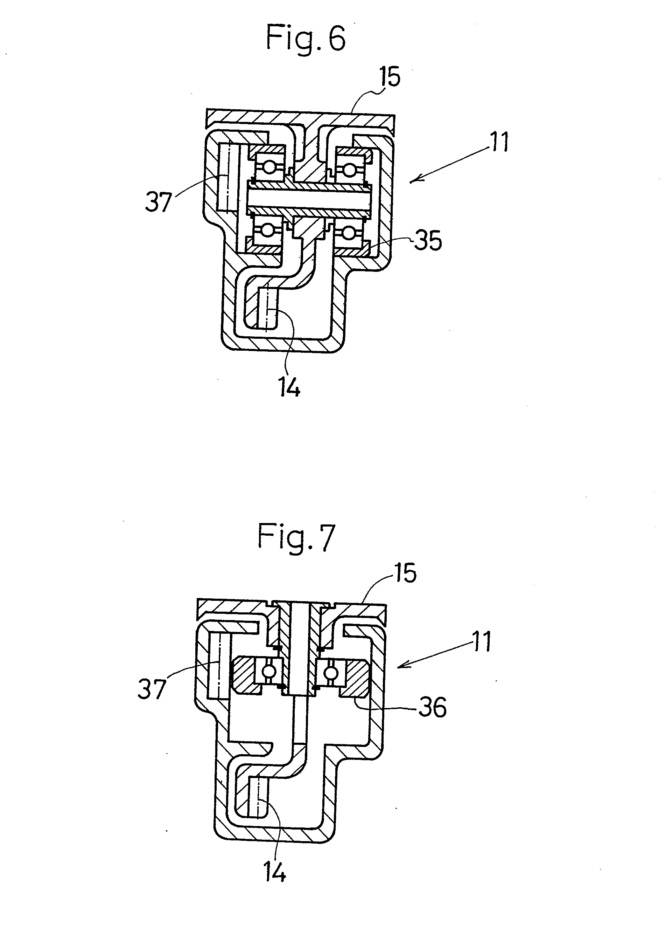

The ring rail 11 is provided with a rotating rack gear 14 (see Figs. 6 through 8) located therewithin and capable of being separated to be open at the same positions as those of separating parts 11 a and 11 b (see Fig. 5) of the ring rail, the rotating rack gear 14 being fixedly supported by a revolving base 15 to revolve above the ring rail 11. The structure including these parts will be described later.

As described above, the present invention has raised a proposal of a structure of an elevating device for the automatic branch cut-off machine, including a structure of a concentric control device 6 for connecting the elevating wheel unit 5 to the other elevating wheel units, a ring rail 11 and rotating rack gear 14 in the transmission system extending from driving means to the elevating wheels of elevating wheel units, and an elevating wheel axis.

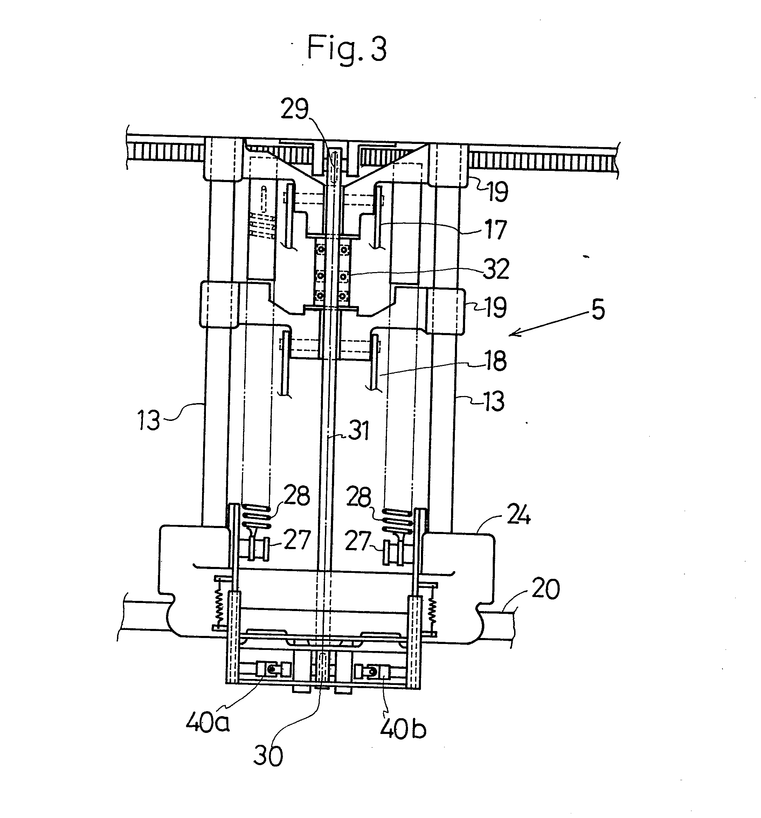

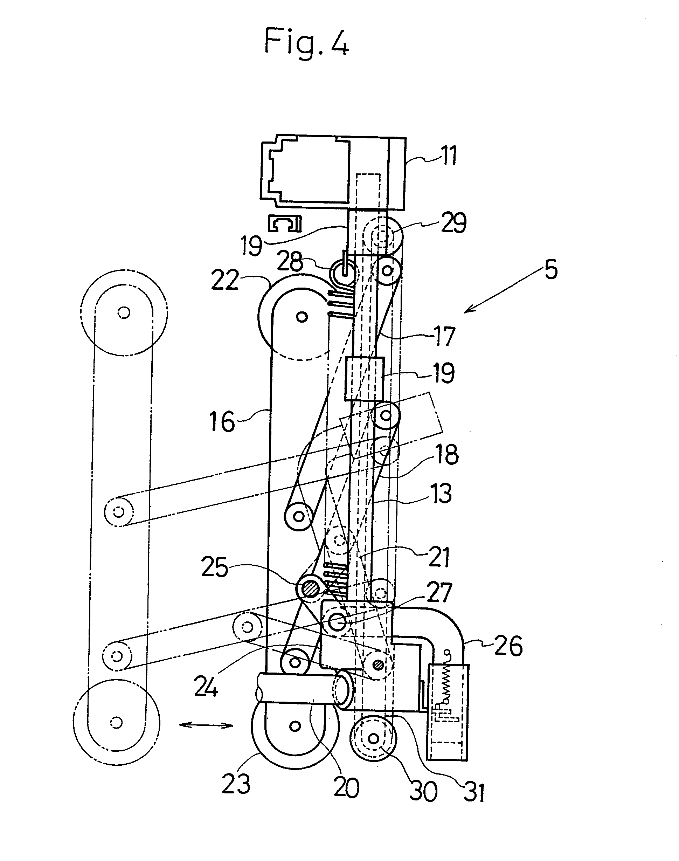

The elevating wheel unit 5, as shown in Figs. 3 and 4, is of such structure that the elevating wheel frame 16 is slidably supported by two upper links 17 and two lower links 18 which are slided by respective slide blocks 19, every two blocks are slidably mounted above and below on each of two parallel guide bars 13 and 13 serving as parts of the machine body frame in such a way that tops of the upper links 17 and lower links 18 are bearingly supported by the elevating wheel frame 16 for forming a pantographic linkage, and support links 21 are provided so as to extend from the midpoints of the lower links 18 toward the lower frame 20 of the body proper below the guide bars 13 for forming a triangular linkage, whereby a linkage of the elevating wheel unit is composed of the abovesaid pantographic linkage and triangular linkage. Such linkage as above permits the elevating wheel frame 16 to move up and down while kept paralles with the guide bars 13 and also to and fro without large vertical displacement, and, accordingly, upper wheels 22 and lower wheels 23 provided at upper and lower ends of the elevating wheel frame 16 are simultaneously pressed to the tree trunk at almost the same fixed positions along the vertical direction regardless of the diameter of the tree trunk, thereby reducing excentricity between the cutting device 7 and the tree trunk. Pressing of upper and lower wheels against the tree trunk is performed by means of pressing springs 28 each stretched between the upper slide block 19 and the catcher 27 of a handle 26 turning around the fulcrum 25 on the bracket 24 provided for the lower ring frame 20. The handle 26, when turned to a position as shown by the alternate long and two dots line, adapts the pressing springs 28 to be dead and pressure of the wheels 22 and 23 to the tree trunk is relieved.

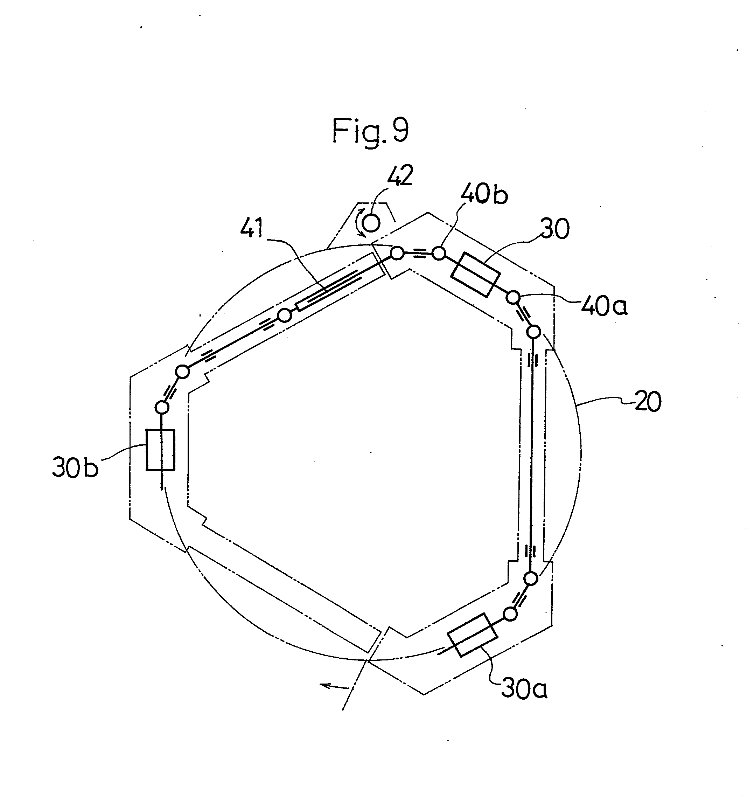

This elevating wheel unit is provided with a contrivance to adjust the pressure of other elevating wheel units to the tree trunk and to keep the machine frame concentric

-8-

with the trunk all the time. Adjustment and control as above are performed by the use of cables as shown in Fig. 9 and will be described later, and, for the above purpose, pantographic linkages are made identical to each other in configuration by putting slide blocks 19 in the similar positions. To this end, sprockets 29 and 30 are provided above and below the machine frame 3, respectively, and a chain 31 is stretched between these sprockets in such manner that a part of the chain is fixed to the connector 32 disposed between the upper and the lower slide blocks 19 and 19 so that the displacement of the slide block is converted into the rotational displacement of the lower sprocket wheel 30.

In an automatic branch cut-off machine according to the present invention, as shown in Fig. 1, the machine frame 3 vertically elevates while supported by three elevating wheel units 5 and driving power is transmitted from an engine 9 mounted on the revolving cutting device 2 revolfing along the ring rail 11 located above the machine frame 3 to driving shafts of the upper wheels 22 and the lower wheels 23. The ring rail 11 in the power transmission system is of a particular structure, as shown in Figs. 4 through 8, wherein the ring is divided into two halves so as to be open at cross section and embrace the tree trunk 33 therein, the ring being rectangular in cross section like a box and open at an upper part of the section while covered with an overlying ring-like revolving base 15 which is supported by a driving gear 34 provided in the ring rail, a plurality of vertically disposed revolving wheels 35, and a plurality of horizontally disposed revolving wheels 36 so as to stably revolve the revolving base 15 on the ring rail 11. The driving gear 34 is fitted onto the driving shaft of the transmission 10 extending from the engine 9 and comprises a pinion gear meshing with the rack 37 provided on the inner side of the interior of the ring rail. The revolving rack gear 14 revolving with the revolving base 15 is internally disposed on the lower side of the ring rail and, while revolving, transmits rotational power to the pinion gear 39 of the reduction gears 38 of the elevating driving device.

Since the revolving rack gear 14 is provided within the ring rail 11 shaped like a box, power transmission members are prevented from being soiled by saw dusts falling down during cut-off of branches.

Fig. 9 shows a transmission part of the concentricity control mechanism extending between elevating wheel units and located near the lower part 20 of the machine frame 3, wherein the lower sprocket 30 as shown in Figs. 3 and 4 is connected to another lower sprocket 30a of the neighbouring wheel unit with a universal joint 40a and, further, to still another lower sprocket 30b of another neighboring wheel unit, as seen on the left side of the drawing, with another universal joint 40b including a double-splined shaft 41. The splined shaft 41 is intended to prevent the universal joints from being detached from each other even when half of the lower frame 20 is turned around a hinge 42 as shown by the arrow mark in the drawing and made open.

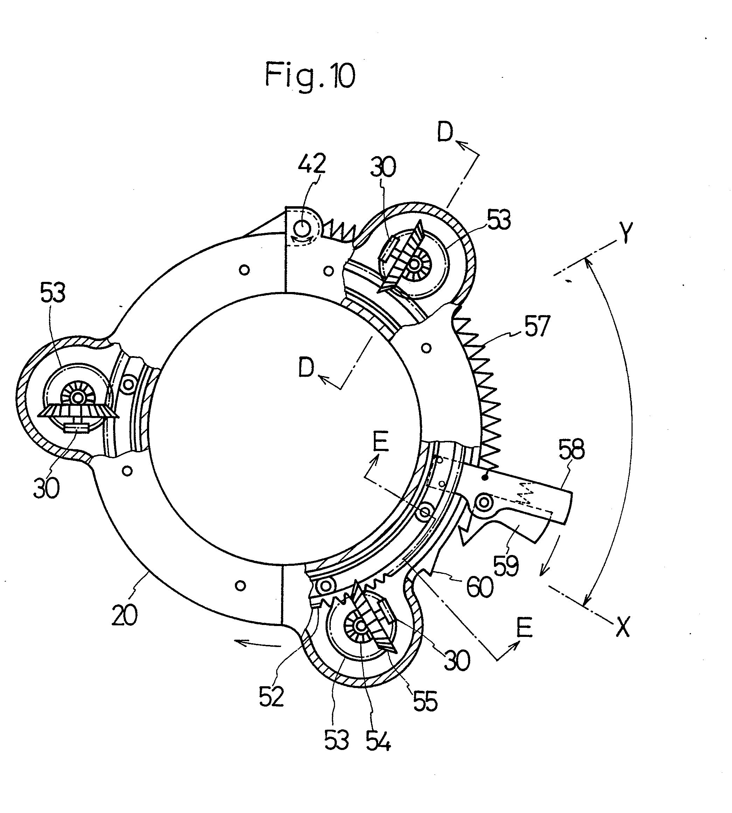

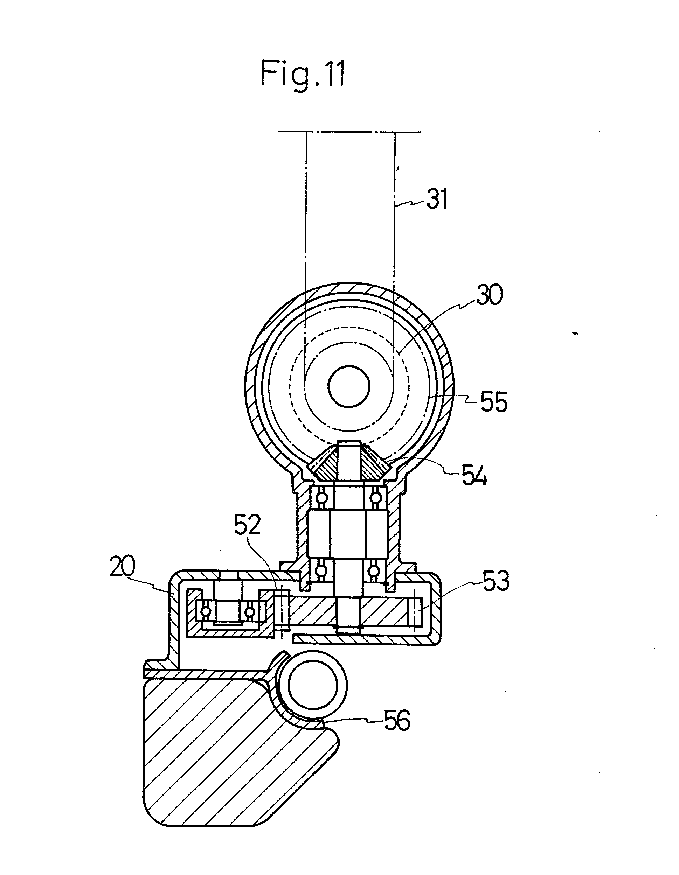

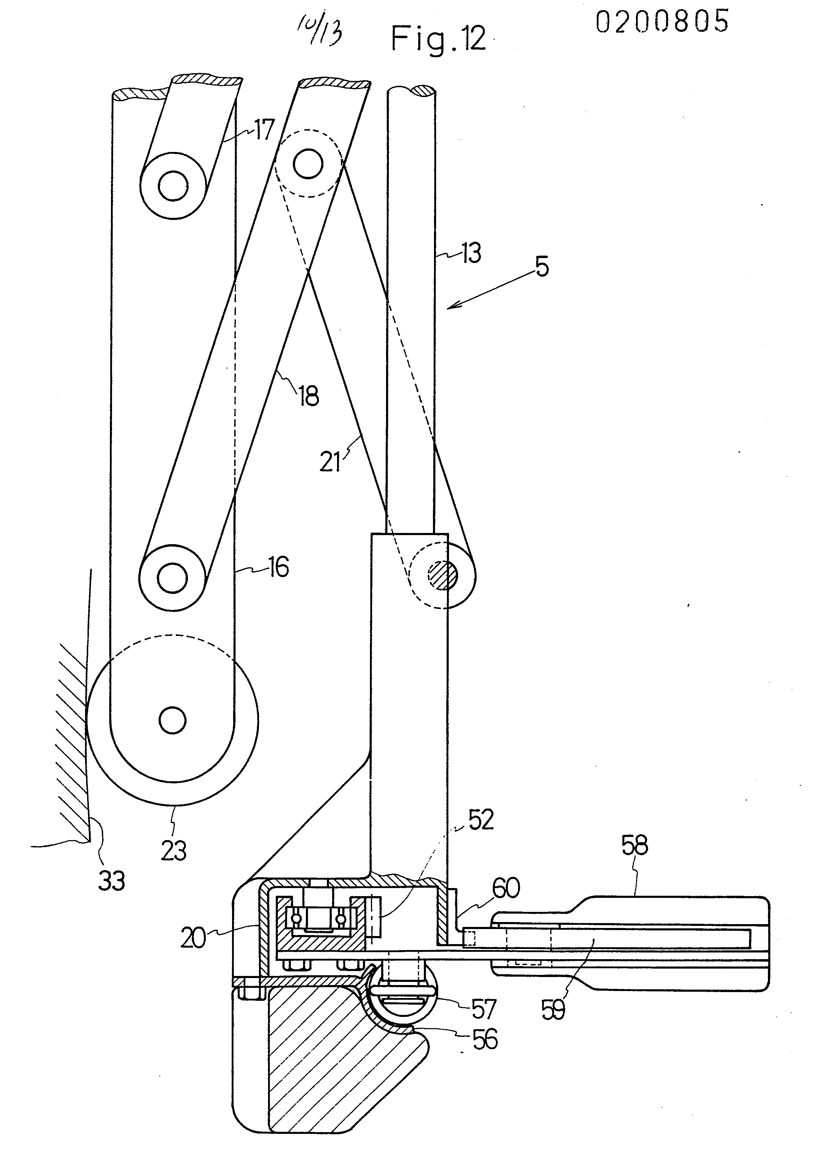

Another embodiment of the power transmission of the concentric control device to engange three elevating wheel units 5 is shown in Fig. 10 through Fig. 12. Their power transmission consists of three pinions 53 for three directions of rack 52 with pressed touch of the upper wheels 22 and the lower wheels 23 to the tree trunk 33, from the pinions 53 to the bevel gears 54,55, sprocket 30 and moving up and down the slide block 19 in Fig. 3. Pressing and releasing of upper and lower wheels 22, 23 against the tree trunk 33 is performed by means of a spring 57 stretched between lower frame 20 and handle 58 fixed on the rack 52. The handle 58 when the hook lever 59 is caught by the hook 60 of the lower frame 20, is positioned at point X in Fig. 10, the wheels 22, 23 are released from the tree trunk 33. If the handle 58 and the hook lever 59 are gripped together by hand, the hook lever 59 takes off from the hook 60, and the handle 58 and rack 52 move toward position Y by the force of spring 57.

Thus, all of the wheels 22, 23 are pressed by excentricity to the tree trunk 33 in one effort.

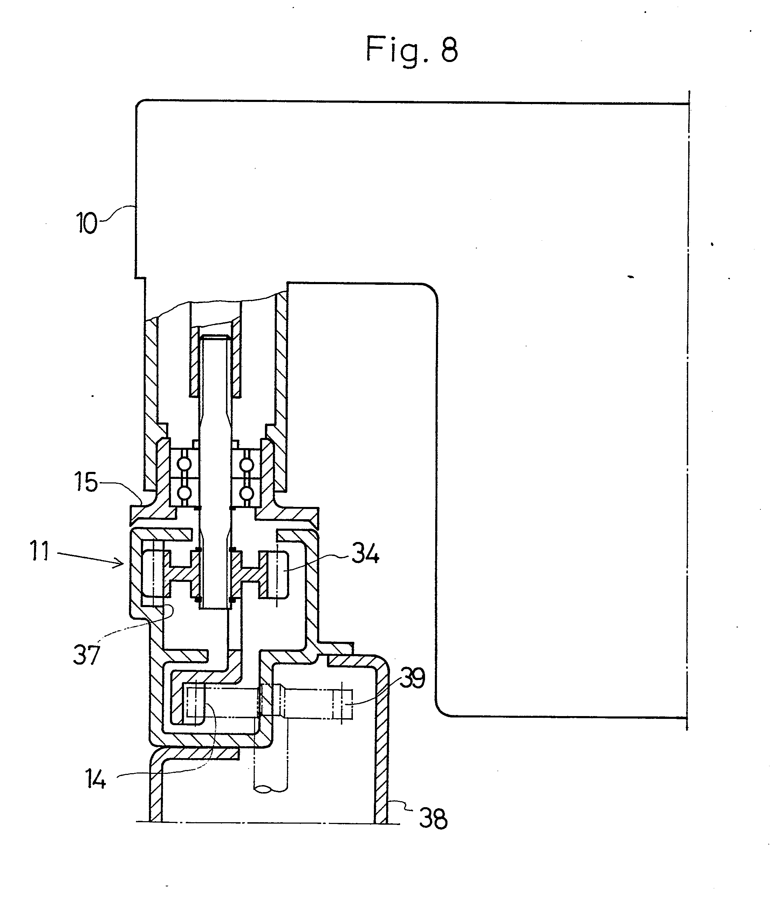

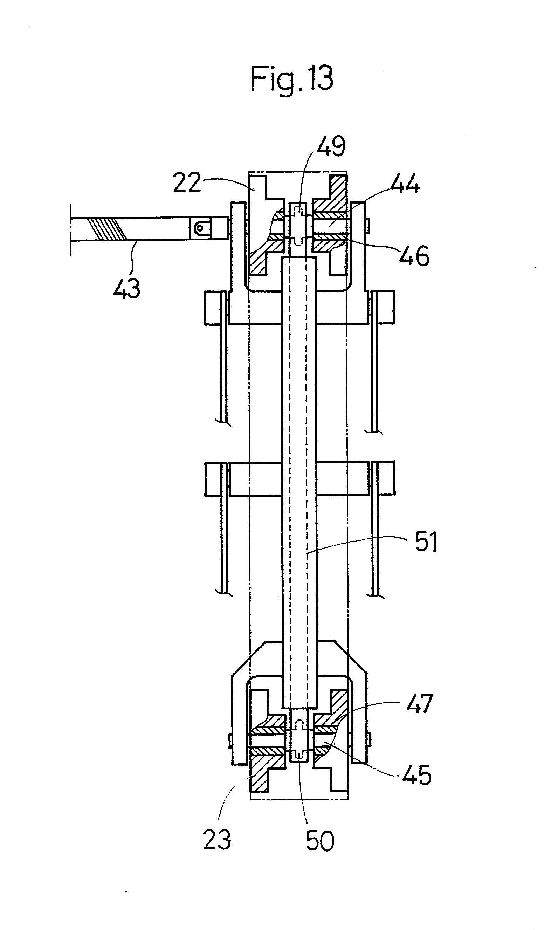

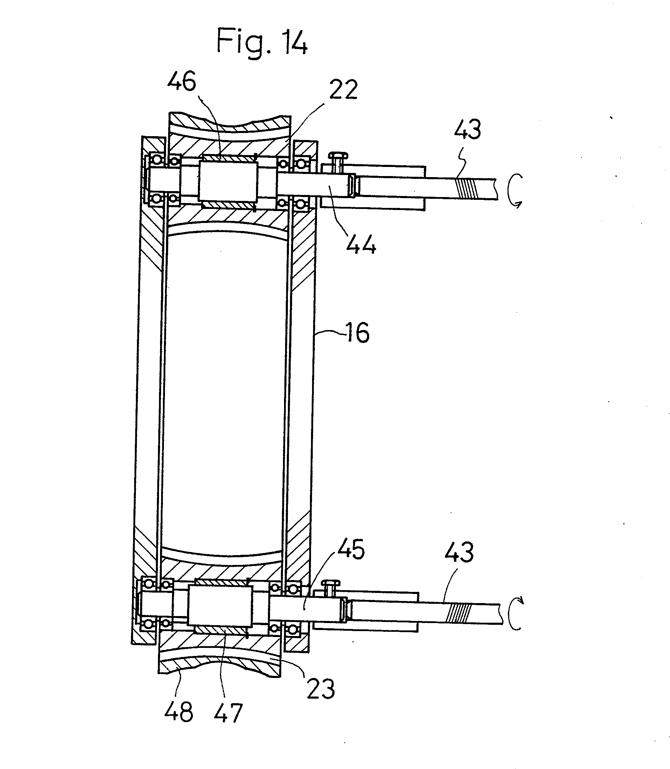

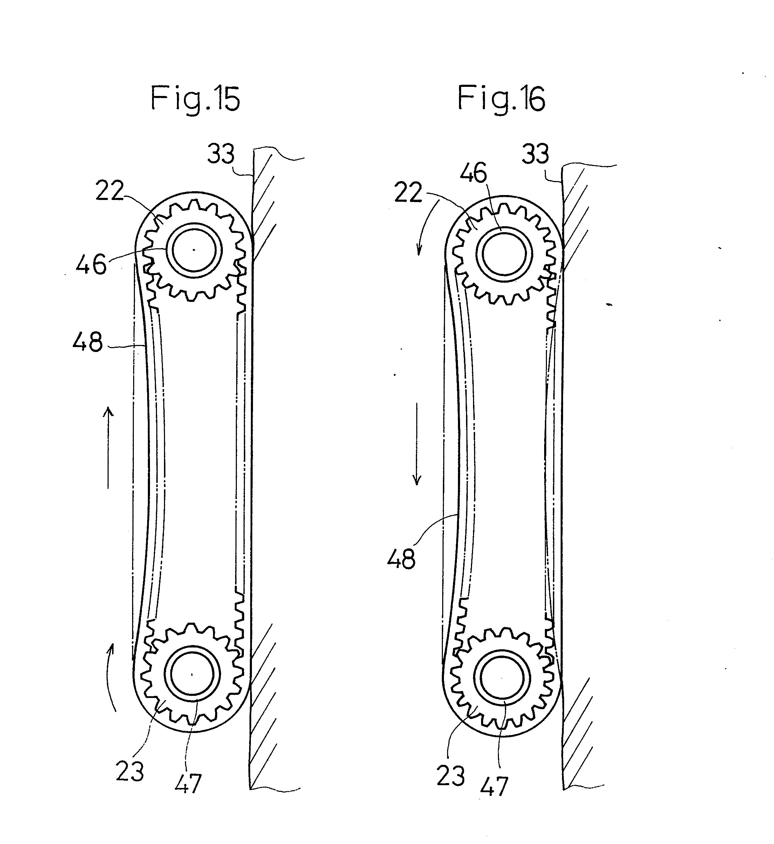

Figs. 13 through 16 are views representing a state of power transmission from the abovesaid reduction gears 38 in Fig. 8 to the wheel shafts of the elevating wheel unit, Fig. 13 showing a type of power transmission to the upper wheels 22 alone through the drive shaft 43 and Fig. 14 showing another type in which the drive shaft 43 is connected to both the upper wheels 22 and the lower wheels 23. All wheels are of the crawler type and adapted to operate as driving wheels. Therefore, one-way clutches 46 and 47 are provided for the upper wheel shaft 44 and the lower wheel shaft 45, respectively, so that the wheels revolve in directions opposite to each other, whereby, when the lower wheel 23 is used for ascent, the one-way clutch is turned in such a direction that power from the lower driving shaft is not transmitted to the upper wheel for preventing the upper wheel 22 from operating as a driving wheel for descent. Thus, as shown in Fig. 15, the crawler 48 is constantly tight on the side of the tree trunk 33 and in close contact therewith, thereby being capable of ascending the trunk without slip. During descent, as shown in Fig. 16, the upper wheel 22 operates as driving shaft contrary to the case of ascent and the tight surface of the crawler touches the tree trunk similar to the case of ascent, thereby stable descent without slip being ensured. When only a single driving shaft 43 is used as shown in Fig. 13, power is transmitted from wheel to wheel by driving sprockets 49 and 50 and a driving chain 51 besides crawlers.

As described in detail as above, in the driving device of an automatic branch cut-off machine of the present invention, elevating wheel units are capable of being simultaneously pressed to the tree trunk to be concentric therewith regardless of the size of a tree at a fixed position or nearby on the machine frame along the vertical direction, whereby crawlers featuring the structure of this device and adapted to be tight on the side of a tree trunk for pressing the trunk ensure stable ascent as well as descent without slip. Further, a ring rail as a member for power transmission system is in a particular configuration and internally contains a revolving rack so as yield less troubles in operation.

Elevating Device for Automatic Branch Cut-off Machines

<u>C l a i m s</u>

1. An elevating device for the automatic branch cut-off machine, which comprises a revolving cutting device (2) for revolving a cutter around a tree trunk (33) and a body proper having a ring rail (11) disposed thereabove for rotatably retaining said revolving cutting device (2) and composed of a frame (3), elevating driving means, a plurality of elevating wheel units (5) and a concentricity control mechanism (6) for driving said elevating wheel units (5), characterized in that: said elevating wheel unit (5) comprises a pantographic linkage (13 - 20) in which elevating wheel frames (16) are connected to upper links (17) and lower links (18) and made slidable by slide blicks (19) fitted on guide bars (13) on the side of the body proper (1); a triangular linkage is formed by providing support links between said pantographic linkage and elevating wheel frames (16); and pressing spring force is acted to slide blocks (19; 19) sliding on the guide bars (13) of the machine frame so as to impart sliding force to elevating wheels for adapting said wheels to be in tight contact with the tree trunk (33).

2. An elevating device for the automatic branch cut-off machine as set forth in Claim 1, wherein elevating wheels in one of a plurality of elevating wheel units (5) convert the linear displacement of slide blocks (19) into rotational displacement thereof so that resultant revolutions of said elevating wheel are transmitted to elevating wheels in the other units and elevating units (5) are adapted to operate in association with each other by means of a concentricity control mechanism (6) for keeping the machine body concentric with a tree trunk (33).

3. An elevating device for the automatic branch cut-off machine as set forth in Claim 1, wherein the ring rail (11) disposed above the machine body is rectangular in cross section like a box and open at the upper part of said section, a revolving rack (14) is provided within the ring rail (11) and integrally connected with the revolving cutting device, and power is transmitted from the revolving cutting device retained by a plurality of revolving wheels including at least one driving wheel in the ring rail (11).

4. An elevating device for the automatic branch cut-off machine as set forth in Claim 1, wherein a crawler (22, 23...) is stretched between a wheel (23) for ascending motion on the lower side and the other wheel (22) for descending motion on the upper side, and each wheel is connected to a driving shaft (43) provided with an one-way clutch (46; 47) to operate in the direction opposite to that of the one-way clutch on the other driving shaft.

Fig. 1

Fig. 2

0200805

Fig. 3

Fig.4

Fig.5

## Fig.6

## Fig.7

Fig. 8

Fig.9

Fig.10

Fig.11

Fig.13

Fig. 14

Fig.15

Fig.16

0200805

European Patent
Office

**EUROPEAN SEARCH REPORT**

Application number

EP 85 10 5656

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| D,A | US-A-4 279 281 (NAKAMURA) <br> * Whole document * | 1 | A 01 G 3/08 |
| A | DE-B-1 275 253 (HELM) <br> * Column 3, line 55 - column 5, line 63; figures 1-3 * | 1,4 | |
| A | US-A-2 482 392 (WHITAKER) <br> * Column 3, line 31 - column 6, line 61; column 7, lines 53-64; figures 1-6,10 * | 1,4 | |

TECHNICAL FIELDS
SEARCHED (Int. Cl.4)

A 01 G
B 66 F
E 04 G
B 27 L

The present search report has been drawn up for all claims

| Place of search <br> THE HAGUE | Date of completion of the search <br> 09-01-1986 | Examiner <br> HERYGERS J.J. |
|---|---|---|

EPO Form 1503. 03.82